# EUROPEAN PATENT APPLICATION

(11) **EP 4 390 997 A1**
(43) Date of publication of application: **26.06.2024**
(21) Application number: 23219514.9
(22) Date of filing: 21.12.2023
(51) Int. Cl.: H01H 23/04, H02B 1/048

(54) **IMPROVED SUPPORT FRAME FOR WALL MOUNTING AT LEAST ONE MODULAR ELECTRICAL APPLIANCE**

(30) Priority: 23.12.2022 IT 202200026721
(71) Applicant: BTICINO S.P.A., 21100 Varese, (IT)
(72) Inventor: GIORDANO, Davide, 21100 Varese (IT)
(74) Representative: Pipoli, Massimo

(57) **Abstract**

There is described a support frame (1) for wall mounting at least one modular electrical appliance (100), comprising a frame body (200,400) fixable to a fixing wall and extending around a mounting through opening (204) defining a mounting seat adapted to receive and retain said at least one modular electrical appliance (100), said frame body (200,400) comprising:
- a base part (200) made of a relatively more rigid material and comprising a frame-shaped plate-like portion (210) which extends around said mounting through opening (204), said base part comprises a first base part face (2) and an opposite second base part face (3) intended to face said fixing wall, said frame-shaped plate-like portion (210) having a front face (211), an opposite rear face (212) intended to face said fixing wall, and a peripheral edge (213) which connects said front face (211) and said rear face (212); and
- at least one insert (400) fixed to said base part (200), said at least one insert (400) being made of a relatively less rigid material than the material of said base part (200) and extending at least partially on the first base part face (2) and/or along said peripheral edge (213) of said frame-shaped plate-like portion (210).

## Description

The present description relates to the technical field of electrical installations, in particular of buildings, such as houses, offices and the like. More in particular, the present description is directed to a support frame for wall mounting at least one modular electrical appliance.

Modular electrical appliances are known, which are usually installed on a wall, forming composite mounting structures, or sets of parts, generally including:
- a plurality of modular electrical appliances;
- a box intended to be wall mounted;
- a support frame fixable to the box, directly or by means of adapters, which are also referred to as "mudrings", and adapted to support the plurality of modular electrical appliances mutually arranged side-by-side; and
- a cover plate fixable to the support frame and provided with a through opening to allow a user to access, visually or manually, the modular electrical appliances installed on the support frame.
The aforesaid sets of parts are often indicated by the term "light points".

The support frames used in the light points of the prior art usually have a frame-shaped base body, typically made of hard plastic, preferably comprising four frame sides, parallel and opposite two by two. Two of the aforesaid opposite frame sides are provided with interlocking and snap-in fixing elements to allow fixing at least one modular electrical appliance, which is provided with interlocking and snap fixing elements conjugated to the interlocking and snap-in fixing elements provided in the support frame. Different types of mounting openings are typically provided in the base body of the support frame to allow wall mounting the support frame and coupling the support frame to the cover plate. For example, a first plurality of fixing openings can be provided, adapted to be crossed by respective fixing screws to allow fixing the support frame to a built-in box and/or a second plurality of fixing openings adapted to be crossed by respective fixing screws to allow for the panel installation of the support frame. Again, fixing channels can be provided to allow the cover plate to be fixed to the support frame.

The support frames of the prior art described above have some drawbacks. A first drawback is linked to the fact that the insertion of the fixing screws through the fixing openings can be relatively complicated because of the mechanical interference of the thread of the screw with the rigid portions of the frame body delimiting the aforesaid fixing openings. For such a reason, according to the diameter and pitch of the screws used, in some cases it can be required to make changes to the support frame during installation and/or the use of tools can be required for positioning the screws at the desired height in the fixing openings. A further drawback of the support frames of the prior art described above is that the peripheral edge of the base body of the support frame can comprise sharp parts and thus cause injuries to the operator mounting the support frame. A further drawback is that when the support frame is mounted on the wall, water can infiltrate between the base body of the support frame and the wall on which the support frame is installed, in particular when the support frame is installed in an outdoor environment or in particularly damp indoor environments, such as a bathroom or a kitchen, for example, resulting in the risk of water coming into contact with live electrical elements of the electrical installation. A further drawback of known support frames described above is that when the support frame is installed on a panel by inserting the fixing screws through the specific fixing openings, a relatively high clamping force is required on the screws to ensure adequate fixing of the support frame to the panel. A further drawback of support frames of the prior art is linked to the fact that they do not always allow for an optimal alignment of modular electrical appliances along the front face of the support frame. A further drawback of the support frames of the prior art described above is that they do not always allow for an optimal alignment of the cover plate with respect to the support frame and/or the modular electrical appliances fixed to the support frame. A further drawback of the support frames of the prior art described above is that the removal of a modular electrical appliance from the support frame is relatively time-consuming and complicated. In fact, if it is necessary to remove a modular electrical appliance from the support frame, for example for replacing it with a new modular electrical appliance or for maintenance purposes, it is necessary to dismount the support frame from the fixing wall, remove the modular electrical appliance to be replaced by uncoupling it from the rear side of the support frame, replace the removed modular electrical appliance by fixing a new modular electrical appliance to the support frame which is inserted into the mounting opening of the support frames from the front side of the frame itself, and remount the support frame to the fixing wall again.

It is general object of the present invention to provide a support frame for wall mounting at least one modular electrical appliance capable of overcoming or at least partially reducing the drawbacks described above with reference to the prior art.

This and other objects are achieved by a support frame, as defined in the appended claim 1 in the more general form thereof, and in the dependent claims in some particular embodiments.

It is a further aspect of the present invention to provide a set of part as defined in claim 13.

The invention will become more apparent from the following detailed description of the embodiments thereof, given by way of non-limiting examples, with reference to the accompanying drawings, in which:
- Fig. 1 shows a perspective view from the front side of a support frame for wall mounting at least one modular electrical appliance according to a currently preferred embodiment;
- Fig. 2 shows a perspective view from the front side of a base part of the support frame in Fig. 1;
- Fig. 3 shows a front plan view of the support frame in Fig. 1;
- Fig. 4 shows a front plan view of the base part in Fig. 2;
- Fig. 5 shows a rear plan view of the support frame in Fig. 1;
- Fig. 6 shows a rear plan view of the base part in Fig. 2;
- Fig. 7 shows a lateral plan view of the support frame in Fig. 1;
- Fig. 8 shows a lateral plan view of the base part in Fig. 2;
- Fig. 9 shows a front plan view of a further part of the support frame in Fig. 1;
- Fig. 10 shows a perspective view from the front side of the further part in Fig. 9;
- Fig. 11 shows a perspective view of an enlarged detail in Fig. 10;
- Fig. 12 shows a lateral and top perspective view of a modular electrical appliance adapted to be mounted on the support frame in Fig. 1;
- Fig. 13 shows a perspective view from the rear side and from the bottom of the modular electrical appliance in Fig. 12;
- Fig. 14 shows a front plan view of the support frame in Fig. 1 and of three modular electrical appliances identical to the modular electrical appliance in Fig. 12 coupled to the support frame;
- Fig. 15 shows a cross-sectional view along line A-A in Fig. 14, where some components of the modular electrical appliance have been removed and in which a cover plate is further depicted coupled to the support frame;
- Fig. 16 shows a cross-sectional view along line B-B in Fig. 14, where some components of the modular electrical appliance have been removed and in which the cover plate in Fig. 15 is further depicted coupled to the support frame;
- Fig. 17 is a partial sectional view along line C-C in Fig. 14, in which a portion of the cover plate in Fig. 15 is further depicted coupled to the support frame.

In the accompanying Figures, the same or similar elements will be generally indicated by the same reference numerals. However, in some cases, for greater clarity of description, identical or similar elements in the accompanying Figures can also be indicated by different reference numerals.

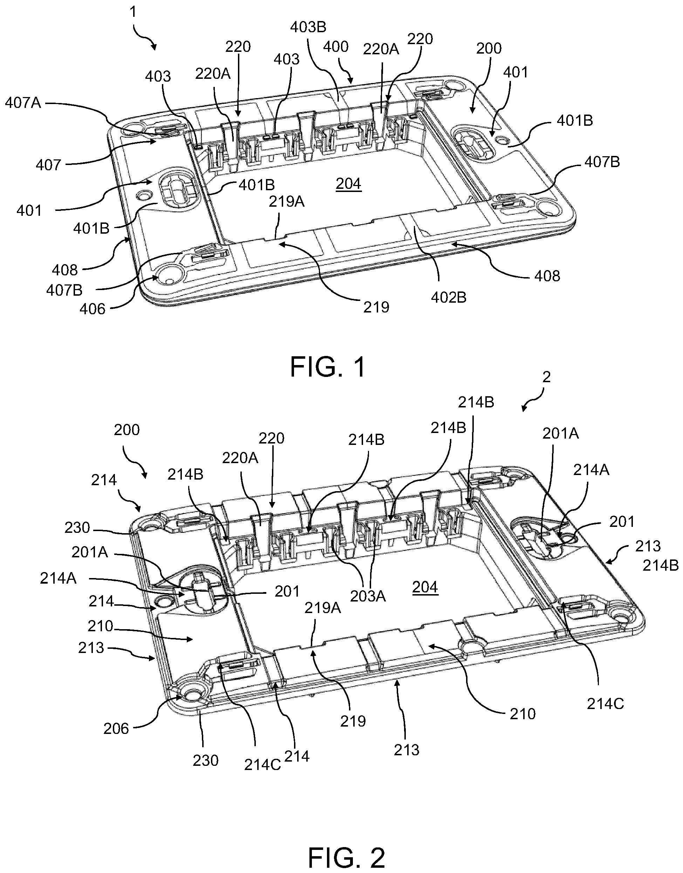

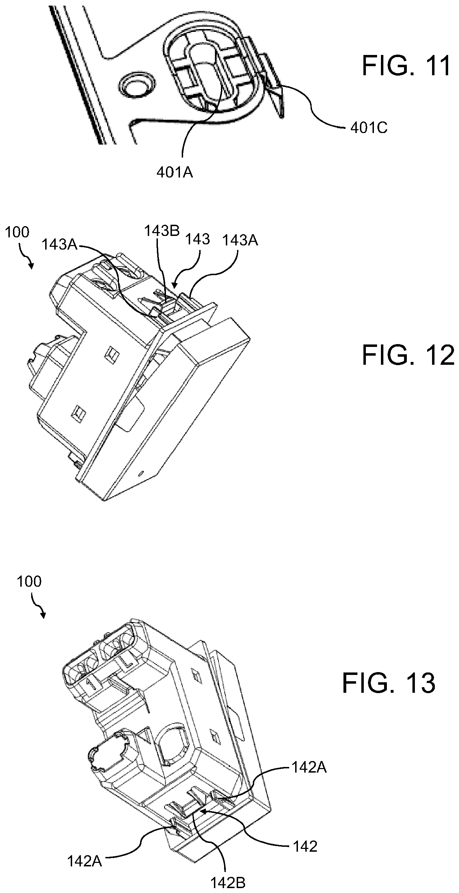

With initial reference to Figs. 1,3,5,7, a support frame for wall mounting at least one modular electrical appliance 100 (Figs. 12-13) has been indicated by reference numeral 1 as a whole. In particular, the support frame 1 allows wall mounting at least one modular electrical appliance for an electrical installation, preferably for a residential electrical installation, such as a domestic electrical system, for example.

In the example shown, without introducing any limitations, the modular electrical appliance 100 is an electrical switch with a push button. However, the modular electrical appliance 100 can generally be any modular electrical appliance adapted to be fixed to the support frame 1. In particular, for the purposes of the present description, the term "modular electrical appliance" generally means any electrical or electronic means or appliance generally belonging to electrical and/or home automation installations in residential buildings and the like, and usually intended to be mounted to, e.g., built into, walls of such buildings preferably alongside one or more further modular electrical appliances.

This definition thus includes, but is not limited to, switches, mains sockets, sockets for data networks, TV sockets, telephone sockets, buttons, switches, deviators, electrical regulation devices in general, connectors, thermostats, timers, fuse blocks, bells/buzzers, emergency lamps, for example removable ones, signaling lamps, for example step markers, displays, for example LCDs and the like.

With reference to Figs. 1,2,3,5,7,9 the support frame 1 comprises a frame body 200,400 fixable to a fixing wall. The frame body 200,400 extends around a mounting through opening 204, or mounting window 204, defining a mounting seat adapted to receive and retain said at least one modular electrical appliance 100 and more preferably a plurality of modular electrical appliances 100 mutually arranged side-by-side. In accordance with an embodiment, the modular electrical appliance 100 is adapted to be removably fixed to the support frame 1.

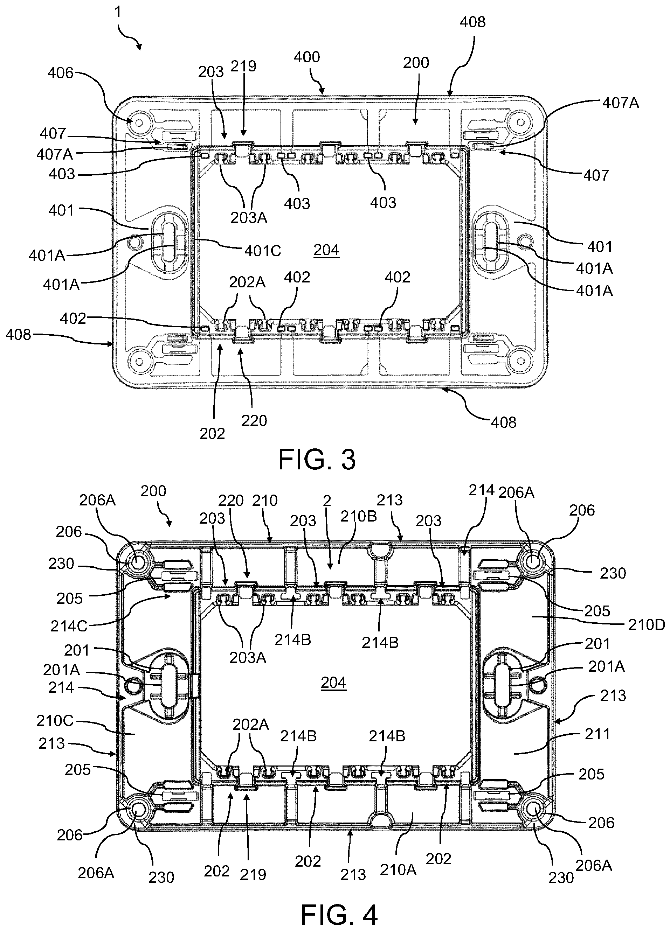

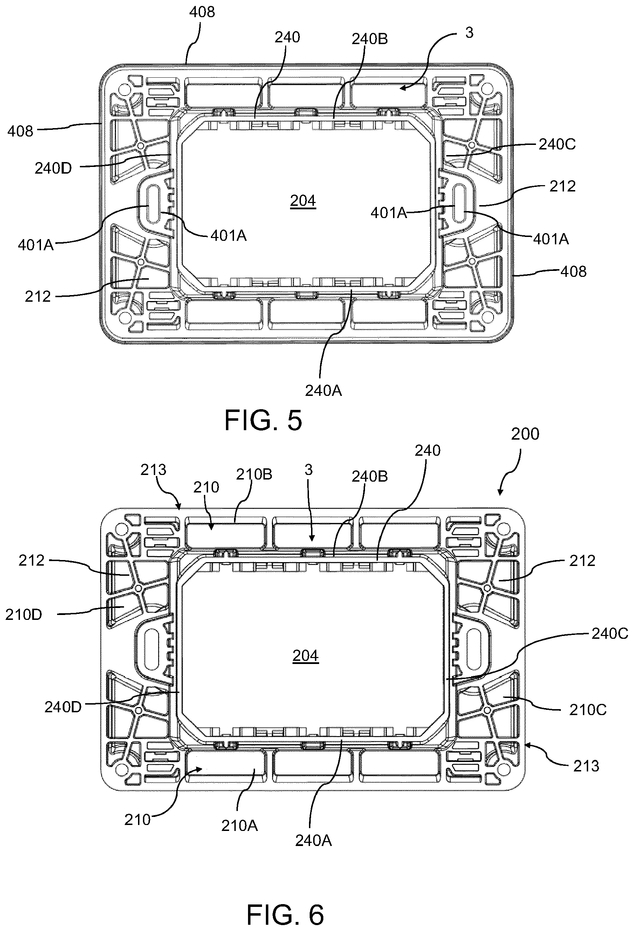

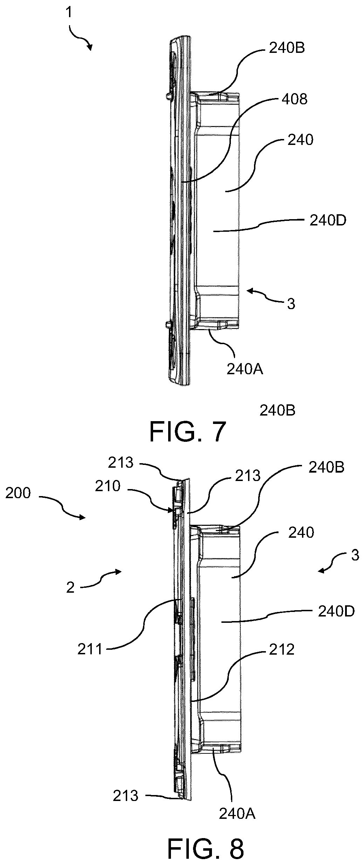

With reference to Figs. 2,4,6,8, the frame body 200,400 comprises a base part 200 which is made of a relatively rigid material, preferably plastic, more preferably hard plastic, e.g., ABS or polycarbonate. With reference to Figs. 4,6,8, the base part 200 comprises a first base part face 2 and an opposite second base part face 3 intended to face the aforesaid fixing wall. The base part 200 comprises a frame-shaped plate-like portion 210 which extends around said mounting through opening 204 and which preferably delimits the mounting through opening 204. With reference to Fig. 8, the frame-shaped plate-like portion 210 has a front face 211, or first face 211, and an opposite rear face 212, or second face 212. The rear face 212 is intended to face the aforesaid fixing wall. The frame-shaped plate-like portion 210 further comprises a peripheral edge 213 which connects the front face 211 and the rear face 212. In particular, the peripheral edge 213 is an outer peripheral edge with respect to the center of the mounting opening 204. With reference to Fig. 4, the frame-shaped plate-like portion 210 preferably comprises four frame sides and in particular comprises a first side 210A, a second side 210B, parallel and opposite to the first side 210A, a third side 210C arranged transversely and interposed between the first side 210A and the second side 201B, and a fourth side 210D opposite and preferably parallel to the third side 210C. With reference to Figs. 6,8, in accordance with an embodiment, the base part 200 comprises a protruding collar 240 which projects from the rear face 212 of the plate-like portion 210 and delimits the mounting through opening 204. Preferably, the protruding collar 240 comprises four collar portions, in particular a first collar portion 240A, a second collar portion 240B parallel and opposite to the first collar portion 240A, a third collar portion 240C arranged transversely and interposed between the first collar portion 240A and the second collar portion 240B, and a fourth collar portion 240D opposite and preferably parallel to the third collar portion 240C. In particular, in accordance with an embodiment, the first collar portion 240A and the second collar portion 240B extend parallel to the first side 210A and the second side 210B of the plate-like portion 210, whereas the third collar portion 240C and the fourth collar portion 204D preferably extend parallel to the third side 210C and the fourth side 210D of the plate-like portion 210, respectively. In practice, in accordance with an embodiment, the base part 200 comprises four portions, i.e., a first portion 210A,240A, a second portion 210B,240B parallel and opposite to the first portion 210A,240A, a third portion 210C,240C arranged transversely and interposed between the first portion 210A,240A and the second portion 210B,240B, and a fourth portion 210D,240D opposite and preferably parallel to the third portion 210C,240C. In particular, in accordance with an embodiment, the first portion 210A,240A, the second portion 210B,240B, the third portion 210C,240C, and the fourth portion 210D,240D of the base part 200 comprise the first side 210A, the second side 210B, the third side 210C, and the fourth side 21 0D, respectively, of the frame-shaped plate-like portion 210. If the protruding collar 240 is provided, the first portion 210A,240A, the second portion 210B,240B, the third portion 210C,240C, and the fourth portion 210D,240D of the base part 200 further comprises the first collar portion 240A, the second collar portion 240B, the third collar portion 240C, and the fourth collar portion 240D.

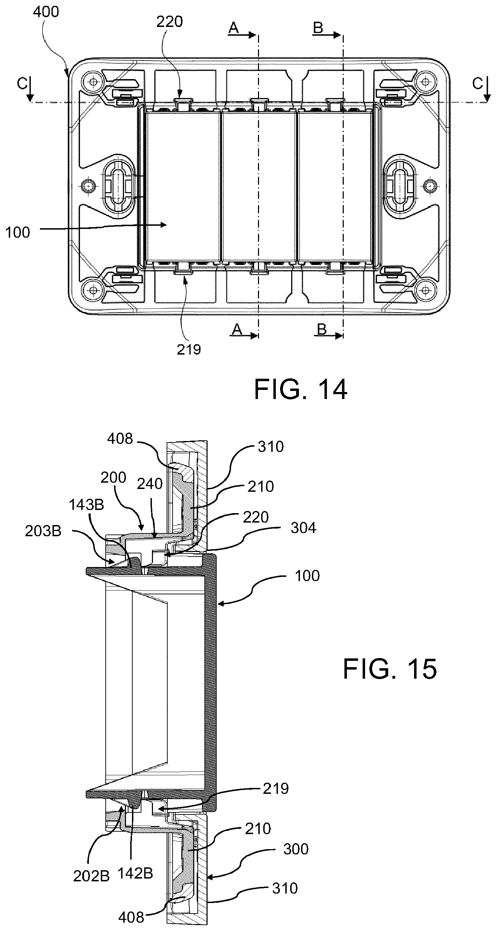

With reference to Fig. 4, in accordance with an embodiment, the base part 200 comprises at least one fixing element 202,203, preferably at least one interlocking and snap-in fixing element 202,203, arranged and configured to removably fix the at least one modular electrical appliance 100 to the support frame 1. Preferably, the base part 200 comprises a plurality of fixing elements 202,203. In particular, in accordance with an embodiment, the at least one fixing element 202,203 is configured so as to allow fixing the modular electrical appliance 100 to the support frame 1 by inserting such an appliance 100 into the mounting through opening 204 on the side of the first base part face 2. In accordance with an embodiment, the at least one fixing element 202,203 comprises a plurality of fixing elements 202,203 which are provided on the first portion 210A,240A and on the second portion 210B,240B of the base part 200 and more preferably on the first collar portion 240A and on the second collar portion 240B. In accordance with an embodiment, the fixing elements 202,203 project from the frame-shaped plate-like portion 210 and/or from the collar 240 towards the mounting through opening 204. In accordance with an embodiment, the fixing elements 202,203 comprise, for each modular electrical appliance 100 to be fixed to the support frame 1, first fixing elements 202 and second fixing elements 203 provided on the first portion 210A,240A and on the second portion 210B,240B, respectively, of the base part 200. With reference to Fig. 15, in accordance with an embodiment, the at least one fixing element 202,203 comprises at least one coupling seat 202B,203B for each modular electrical appliance 100 to be fixed to the support frame 1. Preferably, the first fixing elements 202 and the second fixing elements 203 comprise a first coupling seat 202B and a second coupling seat 203B, respectively, for each modular electrical appliance 100 to be fixed to the support frame 1. With reference to Figs. 3,4, in accordance with an embodiment, the at least one fixing element 202,203 comprises at least one guide element 202A,203A adapted to engage at least one conjugated guide element 142A,143A (Figs. 12,13) which is provided in the at least one modular electrical appliance 100 for guiding the coupling of the modular electrical appliance 100 to the support frame 1 (the at least one conjugated guide element 142A,143A will be described in more detail below). Preferably, the at least one guide element 202A,203A, comprises at least one guide channel 202A,203A. In accordance with an embodiment, the first fixing elements 202 and the second fixing elements 203 comprise a first pair of guide elements 202A and a second pair of guide elements 203A, respectively, for each modular electrical appliance 100 to be fixed to the support frame 1. Preferably, the first pair of guide elements 202A and the second pair of guide elements 203A comprise a first pair of guide channels 202A and a second pair of guide channels 203A, respectively. Preferably, the channels 202A,203A have a blind bottom. In the example shown, in which the support frame 1 not limitedly allows mounting three modular electrical appliances 100 mutually arranged side-by-side, the fixing elements 202,203 particularly comprise three pairs of first guide channels 202A and three pairs of second guide channels 203A.

With reference to Figs. 12,13, in accordance with an embodiment, the modular electrical appliance 100 is preferably provided with at least one fixing element 142,143 conjugated to the at least one fixing element 202,203 provided in the base part 200. Preferably, the at least one conjugated fixing element 142,143 is an interlocking and snap-in fixing element 142,143 conjugated to the at least one interlocking and snap-in fixing element 202,203. Preferably, the at least one conjugated fixing element 142,143 comprises at least one elastic coupling tooth 142B,143B which is adapted to be received in the at least one coupling seat 202B,203B. Preferably, the modular electrical appliance 100 is provided with a plurality of fixing elements 142,143 conjugated to the fixing elements 202,203. Preferably, the conjugated fixing elements 142,143 with which the appliance 100 is provided are interlocking and snap-in fixing elements 142,143 conjugated to the interlocking and snap-in fixing elements 202,203 provided in the base part 200. With reference to Figs. 12,13,15, in accordance with an embodiment, the conjugated fixing elements 142,143 comprise a first conjugated fixing element 142B and a second conjugated fixing element 143B which are arranged on two opposite sides of the modular electrical appliance 100. Preferably, the first conjugated fixing element 142B and the second conjugated fixing element 143B comprise a first and a second elastic coupling tooth 142B,143B, respectively, which are adapted to be engaged in the first and second coupling seat 202B,203B, respectively.

With reference to Figs. 12,13, in accordance with an embodiment, the at least one conjugated fixing element 142,143 comprises the aforesaid at least one guide element 142A,143A conjugated to the at least one guide element 202A,203A. In accordance with an embodiment, in particular, the conjugated fixing elements 142,143 comprise a first pair of guide elements 142A conjugated to the first pair of guide elements 202A, and a second pair of guide elements 143A conjugated to the second pair of guide elements 203A. Preferably, the first pair of conjugated guide elements 142A and the second pair of conjugated guide elements 143A comprise a first pair of guide ribs 142A and a second pair of guide ribs 143A, respectively. Preferably, the first and second elastic coupling tooth 142B,143B are interposed between the first pair of conjugated guide elements 142A and the second pair of guide elements 143A, respectively.

With reference to Fig. 4, in accordance with an embodiment, the base part 200 comprises a plurality of fixing seats 205 or fixing channels 205, preferably defined in the frame-shaped base body, to allow fixing a cover plate 300 to the support frame 1 (Figs. 15-17). Preferably, there are four fixing seats or channels 205. In a manner known per se, the role of the cover plate 300 is both to ensure minimum protection for the electrical appliances, for example from dust, and to prevent dangerous accesses (for example, by means of sharp objects) to the electrically conductive parts of the electrical appliances. Preferably, it is a further role of the cover plate 300 to act as a screen to prevent electric arcs, flames, incandescent wires from escaping to the outside, in order to prevent fires being started. Preferably, it is another important task of the cover plate to mask imperfections produced, for example, by the presence of a cavity in the wall and by the presence of the box and of the support frame which, rather than having aesthetic value, have functional value which is difficult to match with aesthetic requirements or standards. The cover plate 300 is adapted and configured to be fixed, preferably in a removable manner, to the support frame 1. With reference to Figs. 15-17, in accordance with an embodiment, the cover plate 300 comprises a frame-shaped base body 310 which extends around a through opening 304. In a manner known per se, the cover plate 300 comprises a plurality of fixing flaps or fixing teeth, in the example four fixing flaps or fixing teeth (not shown but known per se), which project from the base body 310 toward the support frame 1. Each fixing flap or fixing tooth of the cover plate 300 is adapted to engage in a respective fixing seat or fixing channel 205.

With reference for example to Figs. 3,9,10, the frame body 200,400 comprises at least one insert 400 fixed to the base part 200. In accordance with an embodiment, the at least one insert 400 is fixed to the base part 200 so as to chemically adhere to the base part 200. Advantageously, the base part 200 and the at least one insert 400 will thus behave like a single object, thus preventing the detachment of one of such parts. In accordance with an embodiment, the at least one insert 400 performs at least one technical function and more preferably a plurality of technical functions. Conveniently, the at least one insert 400 is made of a relatively less rigid material than the material of which the base part 200 is made and extends at least partially on the first base part face 2 and/or along the peripheral edge 213 of the frame-shaped plate-like portion 210. In other words, the base part 200 of the frame body 200,400 is made of a relatively more rigid material whereas the at least one insert 400 is made of a relatively less rigid material as compared to the material of which the base part 200 is made. In other words again, the at least one insert 400 is made of a softer material (i.e., more yielding when subjected to a compression action) and more elastic than the material of which the base part 200 is made. In particular, in accordance with an embodiment, the relatively less rigid material of which said at least one insert 400 is made comprises or consists of rubber, preferably rubber obtained from recycled material. Preferably, the rubber of which the at least one insert 400 is made comprises or consists of a thermoplastic elastomer, more preferably a SEBS thermoplastic elastomer, which is preferably modified by adhesion on polycarbonate, preferably PC-60Shore polycarbonate. In accordance with an alternative embodiment, the rubber of which the at least one insert 400 is made comprises or consists of an acrylic based elastomer, preferably an acrylic based elastomer adapted to adhere to polycarbonate.

With reference to Figs. 2,4, in accordance with an embodiment, the base part 200 comprises at least one fixing seat 214, which is preferably defined in the thickness or in the profile of the base part 200. In other words, the at least one seat 214 defines at least one lowered portion of the base part 200. The at least one insert 400 is at least partially received in the at least one fixing seat 214.

With reference to Figs. 2,4,6, in accordance with an embodiment, the base part 200 comprises a plurality of fixing through openings 201, preferably a plurality of elongated slots 201, configured to be crossed by respective fixing screws (not shown). In the example, the base part 200 comprises a pair of openings 201 which are preferably provided on the frame-shaped plate-like portion 210 and more preferably on the third side 210C and on the fourth side 210D of the plate-like portion 210, respectively. Advantageously, in accordance with an embodiment, the at least one insert 400 comprises a plurality of first inserts 401. With reference to Fig. 2, in accordance with an embodiment, the at least one fixing seat 214 comprises a plurality of first fixing seats 214A, which are preferably defined in the thickness or in the profile of the base part 200. Each first insert 401 is at least partially received in a respective first fixing seat 214A. Each first insert 401 is associated with a respective fixing through opening 201 and is arranged and configured to removably retain a respective fixing screw when such a fixing screw is inserted through the fixing through opening 201. Advantageously, since the first inserts 401 are made of the aforesaid relatively less rigid material, they allow correctly inserting the fixing screws with a single quicker, simpler and more natural gesture as compared to traditional support frames. Moreover, the first inserts 401 conveniently allow using a wider variety of fixing screws as compared to those that can be used with traditional support frames, in particular also fixing screws having different diameters or pitches, without having to modify anything during installation. This also applies in the case of more difficult installations using self-tapping screws for wood. Again, the first inserts 401 advantageously allow positioning the respective fixing screws at the desired height without any effort or however without the need to use tools regardless of the length, pitch or section of the fixing screws. Moreover, the first inserts 401 ensure the retention of the fixing screws (i.e., they ensure that the fixing screws inserted into the openings 201 remain constrained to the support frame 1) in a variety of situations, e.g., during the packaging, transport or on-site use of the support frame 1.

With reference to Fig. 4, in accordance with an embodiment, each of the aforesaid fixing through openings 201 is delimited by a respective opening edge 201A. In accordance with an embodiment, each first insert 401 covers at least partially and more preferably entirely a respective opening edge 201A. With reference to Figs. 3,9-11, advantageously the first inserts 401 each comprise at least one protruding retaining portion 401A arranged so as to project from the opening edge 201A towards the respective fixing through opening 201. In accordance with an embodiment, the at least one protruding retaining portion 401A comprises at least one retaining rib 401A. Preferably, the at least one protruding retaining portion 401A comprises a pair of protruding retaining portions 401A opposed to each other, more preferably a pair of retaining ribs 401A opposed to each other. In accordance with an embodiment, at least one of the first inserts 401 comprises a tab 401C extending along a portion of the base part 200 facing the mounting opening 204. Advantageously, the tab 401C allows for the discharge of gases or overflow, when coupling at least one insert 400 to the base part 200 and more preferably when filling with the rubber of which the at least one insert 400 is preferably made.

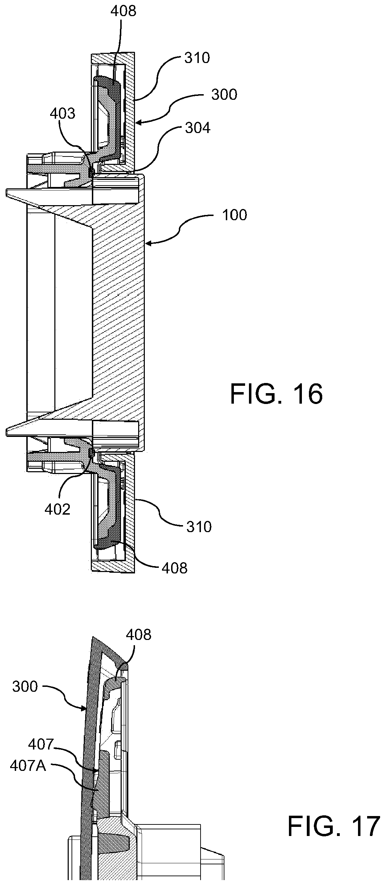

With reference to Figs. 3,9,10, in accordance with an embodiment, the at least one insert 400 comprises at least a second insert 402,403 comprising at least one alignment shock-absorbing pad 402,403 arranged to contact the at least one modular appliance 100 when the modular electrical appliance 100 is coupled to the support frame 1 (Fig. 16). Advantageously the fact of providing the at least one alignment shock-absorbing pad 402,403 allows recovering all or almost all the clearance between the modular electrical appliance 100 and the support frame 1, thus ensuring a constantly optimal alignment of the modular electrical appliances 100 fixed to the support frame 1. Moreover, the at least one alignment shock-absorbing pad 402,403 allows for a significant increase of the lifetime of the molds of the holders for fixed/movable modular electrical appliances and thus less maintenance of the molds as a result of cancelling the drift on critical parts most subject to mechanical stress, such as the elastic coupling teeth 142B,143B. In fact, in the coupling zones of modular electrical appliances, and in particular in the zones on which the elastic coupling teeth 142B,143B are provided, the vertical clearances due to wear increase. When compressed, however, the at least one alignment shock-absorbing pad 402,403 ensures that the coupling zones are always in interference and allows for a wear of the elastic coupling teeth up to over 0.3mm, for example, which allows significantly higher level recovery ranges or even bringing the mold to the end of its lifetime without ever intervening.

With reference to Fig. 3, in accordance with an embodiment, the at least a second insert 402,403 comprises a plurality of alignment shock-absorbing pads 402,403 and more preferably comprises at least one alignment shock-absorbing pad 402 and at least a second alignment shock-absorbing pad 403 which are arranged respectively on the first portion 210A,240A and on the second portion 210B,240B of the base part 200. Preferably, the at least a first pad 402 is arranged adjacent or proximal to the first fixing elements 202 and the at least a second pad 403 is arranged adjacent or proximal to the second fixing elements 203. Preferably, the at least a second insert 402,403 comprises, for each modular electrical apparatus 100, a pair of first alignment shock-absorbing pads 402 and a pair of second alignment shock-absorbing pads 403. In the example shown, the support frame 1 comprises in particular six first alignment shock-absorbing pads 402 and six second alignment shock-absorbing pads 403. In accordance with an embodiment, for each electrical appliance 100, the first pair of guide elements 202A is provided to be interposed between a pair of first alignment shock-absorbing pads 402 and the second pair of guide elements 203A is provided to be interposed between a pair of second alignment shock-absorbing pads 402. With reference to Figs. 2,4, in accordance with an embodiment, the at least one fixing seat 214 comprises one or more second fixing seats 214B each adapted to at least partially receive at least one respective second insert 402,403 and each of which is preferably defined in the thickness or in the profile of the base part 200. In the example shown, the at least one fixing seat 214 comprises eight second fixing seats 214B, in particular four seats 214B adapted to receive each pair of alignment shock-absorbing pads 402,403 and four seats 214B each adapted to receive only one alignment shock-absorbing pad 402,403.

With reference to Figs. 1,3,9,10,17, in accordance with an embodiment, the at least one insert 400 comprises at least a third insert 407 comprising an alignment protrusion 407A which projects from said first base part face 2 to allow aligning the cover plate 300, couplable to the frame body 200,400, with respect to the support frame 1 and/or the at least one modular electrical appliance 100. In particular, in accordance with an embodiment, the alignment protrusion 407A projects frontally from the first base part face 2. In particular, in accordance with an embodiment, the protrusion 407A has a triangular shape. Advantageously, due to the related alignment protrusion 407A, the at least one alignment insert 407 allows, ensuring a stable, absolutely independent support for the cover plate 300, any coupling errors to be compensated for in the assembly comprising the support frame 1 and the cover plate 300, preferably together with the mechanical action of the fixing flaps or teeth of the cover plate 300 coupled in the respective fixing seats or channels 205. A certain and constant optimal alignment is thus ensured between the cover plate 300 and the support frame 1 as well as between the cover plate 300 and the modular electrical appliances 100 coupled to the support frame 1. In accordance with an embodiment, the at least one insert 400 comprises a plurality of third inserts 407, each of which preferably comprises a respective alignment protrusion 407A. In accordance with an embodiment, each alignment protrusion 407A is associated with or arranged proximal or adjacent to a respective fixing seat or channel 205 provided in the base part 200. In the example, the at least one insert 400 comprises, without limitation, four third inserts 407 which comprise four alignment protrusions 407A. With reference to Fig. 2, in accordance with an embodiment, the at least one fixing seat 214 comprises at least a third fixing seat 214C adapted to at least partially receive the aforesaid at least a third insert 407 and which is preferably defined in the thickness or in the profile of the base part 200. Preferably, the at least one fixing seat 214 comprises a third fixing seat 214C for each third insert 407.

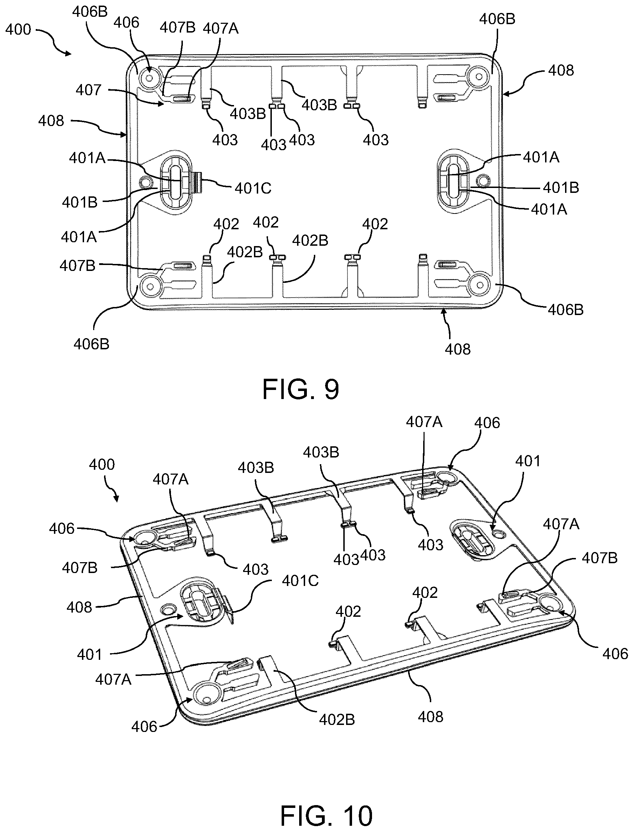

With reference to Figs. 3,9, in accordance with an embodiment, the at least one insert 400 comprises at least a fourth insert 408 arranged so as to extend peripherally along the entire peripheral edge 213 of the aforesaid frame-shaped plate-like portion 210. Advantageously, this improves the ergonomics of the support frame 1 allowing for a better grip thereof and making it more pleasant to touch as compared to the support frames of the prior art. Moreover, the support frame 1 is thus completely devoid of sharp zone along the peripheral edge 213. In particular, in accordance with an embodiment, the at least a fourth insert 408 is a frame-shaped insert. In accordance with an embodiment, the at least a fourth insert 408 at least partially covers the thickness of said peripheral edge 213 protruding beyond the rear face 212 of the frame-shaped plate-like portion 210 or at least partially covers the thickness of the peripheral edge 213 from the rear face 212 towards the front face 211. Advantageously, the at least a fourth insert 408 thud allows the rear part of the support frame 1, i.e., the part of the frame 1 intended to face the fixing wall, to adapt to any surface, even particularly uneven ones. In particular, the at least one insert 408, preferably being compressed or squashed, allows recovering the distances, even the larger ones in panel installations, without taking any special measures. Moreover, the at least one insert 408 thus advantageously allows ensuring a liquid tightness along the peripheral edge 213 preventing the infiltration of water between the fixing wall and the support frame 1, which can occur for example if the support frame 1 is mounted on a fixing wall located in an outdoor environment or in a particularly damp indoor environment, such as the wall of a kitchen or a bathroom, for example. In accordance with a convenient embodiment, the at least a fourth insert 408 covers the entire thickness of the peripheral edge 213. The at least one insert 408 thus advantageously allows both improving the ergonomics of the support frame 1 and making the peripheral edge 213 devoid of sharp zones as described above, and ensuring a liquid tightness along the peripheral edge 213.

With reference to Fig. 4, in accordance with an embodiment, the base part 200 comprises a plurality of anchoring seats 206, in the non-limiting example four anchoring seats 206, which are configured to be crossed by respective anchoring elements, such as anchoring screws or anchoring nails, for example, to allow installing the support frame 1 on a panel. Preferably, each anchoring seat 206 is at least partially cone-shaped and defines a cavity extending into the thickness or profile of the base part 200. Preferably, each anchoring seat 206 comprises a respective anchoring through opening 206A preferably having a circular shape. In accordance with an embodiment, each anchoring seat 206 is arranged at a respective angle portion 230 of the frame-shaped plate-like portion 210. With reference to Fig. 3, conveniently, in accordance with an embodiment, the at least one insert 400 comprises a plurality of fifth inserts 406 each arranged so as to cover or coat, either partially or completely, a respective anchoring seat 206 of the aforesaid plurality of anchoring seats 206. In accordance with an embodiment, each fifth insert 406 is partially or completely counter-shaped with respect to the corresponding anchoring seat 206. Preferably, each fifth insert 406 can comprise one or more cuts located at the respective anchoring seat 206 to facilitate the insertion of one of the aforesaid anchoring elements through the anchoring seat 206 itself. Advantageously, the fifth inserts 406 facilitate the panel installation of the support frame 1. In fact, by virtue of the fifth inserts 406, it is possible to use nails or screws as anchoring elements indifferently according to needs, leaving the choice to the installer. Moreover, due to the presence of the less rigid material of the fifth inserts 406 positioned at the anchoring seats 206, it is possible to apply a less clamping force, always obtaining the same sealing result obtainable with a traditional support frame.

With reference to Figs. 9, 10, in accordance with an embodiment, the aforesaid first inserts 401 and/or the at least a second insert 402,403 and/or the at least a third insert 407 and/or the at least a fourth insert 408 and/or the aforesaid fifth inserts 406 are made in a single piece. In particular, again with reference to Figs. 9-10, in accordance with an embodiment, the at least one insert 400 comprises, for each first insert 401, a respective first connecting portion 401B adapted to connect each first insert 401 to the fourth insert 408. Preferably, the first connecting portion 401B is an enlarged connecting portion. Advantageously, the provision of such an enlarged connecting portion 401B, in addition to having an aesthetic function, allows improving the injection flows during the construction of the support frame 1. In accordance with an embodiment, the at least one insert 400 comprises at least a second connecting portion 402B,403B adapted to connect the at least a second insert 402,403 to the fourth insert 408. In accordance with an embodiment, the at least one insert 400 comprises a plurality of second connecting portions 402B,403B, in the example eight second connecting portions 402B,403B, preferably having a rectilinear extension, each of which connects one or more second inserts 402,403, to the fourth insert 408. In accordance with an embodiment, the at least one insert 400 comprises at least a third connecting portion 407B adapted to connect the at least a third insert 407 to the fourth insert 408 and/or to a fifth insert 406. Preferably, the at least one insert 400 comprises a third connecting portion 407B for each third insert 407. In the example, the at least one insert 400 comprises in particular four third connecting portions 407B. In accordance with an embodiment, the at least one insert 400 comprises at least a fifth connecting portion 406B adapted to connect the at least a fifth insert 406 to the fourth insert 408. Preferably, the at least one insert 400 comprises a fifth connecting portion 406B for each fifth insert 406. In the example, the at least one insert 400 comprises in particular four fifth connecting portions 406B.

In accordance with an embodiment, the first inserts 401 and/or the at least a second insert 402 and/or the at least a third insert 407 and/or the at least a fourth insert 408 and/or the aforesaid fifth inserts 406 are fixed or coupled to the base part 200 by two-shot injection molding.

With reference to Figs. 1,3,14,15, in accordance with an embodiment, the base part 200 comprises, for each modular electrical appliance 100 to be fixed to the support frame 1, at least one uncoupling channel 219,220 accessible from the first base part face 2. The at least one uncoupling channel 219,220 is arranged and configured to allow inserting a tool, such as a screwdriver, for example, through the uncoupling channel 220 in order to uncouple the at least one modular electrical appliance 100 from the support frame 1. In particular, a tool can be inserted through the at least one uncoupling channel 219,220 so as to engage or act on the at least one conjugated fixing element 142,143 of the modular electrical appliance 100, so as to release the at least one conjugated fixing element 142,143 from the at least one coupling seat 202B,203B. For example, a tool such as a screwdriver can be inserted through the at least one uncoupling channel 219,220 and act on the at least one elastic tooth 142B,143B so as to bend it and uncouple it from the at least one coupling seat 202B,203B. As can be seen in Fig. 14, the at least one uncoupling channel 219,220 is particularly arranged and configured so as to be accessible from the first base part face 2 even when the at least one modular electrical appliance 100 is coupled to the support frame 1. Advantageously, this allows uncoupling of the at least one modular electrical appliance 100 from the support frame 1 and removing it from the side of the first base part face 2 even when the support frame 1 is already mounted on the fixing wall. The operator can thus intervene for maintenance much more quickly as compared to the solutions of the prior art simply using a common tool such as a screwdriver, for example, keeping the resistance of the coupling between the modular electrical appliance 100 and the support frame 1 unvaried. Preferably, when the cover plate 300 is coupled to the support frame 1, the at least one uncoupling channel 219,220 is covered by the cover plate 300.

With reference to Figs. 1,3, in accordance with an embodiment, the at least one uncoupling channel 219,220 is defined by an uncoupling recess provided in a portion of the base part 200 which delimits the mounting through opening 204. In particular, in accordance with an embodiment, the at least one uncoupling channel 219,220 has a channel wall 219A,220A facing the mounting through opening 204 and an open side opposite to the channel wall 219A,220A. In other words, when the modular electrical appliance 100 is coupled to the support frame 1, the channel wall 219A,220A faces the at least one conjugated fixing element 142,143 of the modular electrical appliance 100. In accordance with an embodiment, the at least one uncoupling channel 219,220 is a tapered channel in the direction from the first base part face 2 to the second base part face 3. In accordance with an embodiment, the base part 200 comprises a plurality of uncoupling channels 219,220 and preferably comprises, for each modular electrical appliance 100 to be fixed to the support frame 1, a first uncoupling channel 219, preferably comprising a respective first channel wall 219A, which is provided on the first portion 210A,240A of the base part 200, and a second uncoupling channel 220, preferably comprising a respective second channel wall 220A, which is provided in the second portion 210B,240B of the base part 200. In the exemplified embodiment, where the support frame 1 allows mounting three modular electrical appliances 100 mutually arranged side-by-side, the base part 200 comprises, without introducing any limitations, three first uncoupling channels 219 and three second uncoupling channels 220. In accordance with an embodiment, each first uncoupling channel 219 is interposed between a first pair of guide elements 202A provided in the first portion 210A,240A of the base part 200. Moreover, each second uncoupling channel 220 is interposed between a second pair of guide elements 203A provided in the second portion 210B,240B of the base part 200.

Based on the above description, it may thus be understood how a support frame of the above-described type allows achieving the objects mentioned above with reference to the prior art. Without prejudice to the principle of the invention, the embodiments and the constructional details may be broadly varied with respect to the above description merely disclosed by way of a non-limiting example, without departing from the scope of the invention as defined in the appended claims.

## Claims

1. A support frame (1) for wall mounting at least one modular electrical appliance (100), comprising a frame body (200,400) fixable to a fixing wall and extending around a mounting through opening (204) defining a mounting seat adapted to receive and retain said at least one modular electrical appliance (100), said frame body (200,400) comprising:
- a base part (200) made of a relatively more rigid material and comprising a frame-shaped plate-like portion (210) which extends around said mounting through opening (204), said base part comprises a first base part face (2) and an opposite second base part face (3) intended to face said fixing wall, said frame-shaped plate-like portion (210) having a front face (211), an opposite rear face (212) intended to face said fixing wall, and a peripheral edge (213) which connects said front face (211) and said rear face (212); and
- at least one insert (400) fixed to said base part (200), said at least one insert (400) being made of a relatively less rigid material than the material of said base part (200) and extending at least partially on the first base part face (2) and/or along said peripheral edge (213) of said frame-shaped plate-like portion (210).

2. A support frame (1) according to claim 1, wherein said relatively less rigid material of which said at least one insert (400) is made comprises or consists of rubber.

3. A support frame (1) according to claim 1 or 2, wherein said base part (200) comprises at least one fixing seat (214) defined in the thickness of said base part (200) in which said at least one insert (400) is at least partially received.

4. A support frame (1) according to any one of the preceding claims, wherein said base part (200) comprises a plurality of fixing through openings (201) configured to be crossed by respective fixing screws, said at least one insert (400) comprising a plurality of first inserts (401) each of which is associated with a respective fixing through opening (201) and is arranged and configured to removably retain a respective fixing screw of said fixing screws when such a fixing screw is inserted through the fixing through opening (201).

5. A support frame (1) according to claim 4, wherein each of said fixing through openings (201) is delimited by a respective opening edge (201A) and wherein said first inserts (401) each comprise at least one protruding retaining portion (401A) arranged so as to project from said opening edge (201A) towards the respective fixing through opening (201).

6. A support frame (1) according to any one of the preceding claims, wherein said at least one insert (400) comprises at least a second insert (402,403) comprising at least one alignment shock-absorbing pad (402,403) arranged to contact said at least one modular appliance (100) when said modular electrical appliance (100) is coupled to the support frame (1).

7. A support frame (1) according to any one of the preceding claims, wherein said at least one insert (400) comprises at least a third insert (407) including an alignment protrusion (407A) which projects from said first base part face (2) to allow aligning a cover plate, couplable to the frame body (200,400), with respect to the support frame (1) and/or the at least one modular electrical appliance (100).

8. A support frame (1) according to any one of the preceding claims, wherein said at least one insert (400) comprises at least a fourth insert (408) arranged so as to extend peripherally along the entire peripheral edge (213) of said frame-shaped plate-like portion (210).

9. A support frame (1) according to claim 8, wherein said fourth insert (408) at least partially covers the thickness of said peripheral edge (213) protruding beyond the rear face (212) of said frame-shaped plate-like portion (210) or at least from the rear face (212) towards the front face (211) of said frame-shaped plate-like portion (210).

10. A support frame (1) according to claim 8 or 9, wherein said fourth insert (408) covers the entire thickness of said peripheral edge (213).

11. A support frame (1) according to any one of the preceding claims, wherein said base part (200) comprises a plurality of anchoring seats (206) configured to be crossed by respective anchoring elements to allow installing the support frame (1) on a panel, wherein said at least one insert (400) comprises a plurality of fifth inserts (406) each arranged so as to partially or completely cover a respective anchoring seat (206) of said plurality of anchoring seats.

12. A support frame (1) according to any one of the preceding claims, wherein said first inserts (401) and/or said at least a second insert (402) and/or said at least a third insert (407) and/or said at least a fourth insert (408) and/or said fifth inserts (406) are made in one piece.

13. A set of parts (1,100,300) comprising a support frame (1) according to any one of the preceding claims, at least one modular electrical appliance (100) adapted to be fixed to the support frame (1), and preferably a cover plate (300) adapted to be removably fixed to the support frame (1).
